# FASCICULE DE BREVET EUROPEEN

(11) **EP 3 170 296 B1**
(45) Date de publication et mention de la délivrance du brevet: **01.01.2020**
(21) Numéro de dépôt: 15759510.9
(22) Date de dépôt: 10.07.2015
(51) Int. Cl.: H04L 29/06, G06F 21/10, H04N 21/433, H04N 21/4405, H04N 5/913, H04N 21/4408

(54) **PROCÉDÉ D'ACCÈS À UN CONTENU MULTIMÉDIA PROTÉGÉ PAR UN TERMINAL**
VERFAHREN ZUM ZUGRIFF AUF DURCH EIN ENDGERÄT GESCHÜTZTEN MULTIMEDIA-INHALT
METHOD OF ACCESS TO A MULTIMEDIA CONTENT PROTECTED BY A TERMINAL

(30) Priorité: 16.07.2014 FR 1456806
(43) Date de publication de la demande: 24.05.2017
(73) Titulaire: Viaccess, 92057 Paris La Défense Cedex (FR)
(72) Inventeur: DOGUI, Amine, 92130 Issy-les-Moulineaux (FR)
(74) Mandataire: Colombo, Michel
(86) Numéro de dépôt international: PCT/FR2015/051928
(87) Numéro de publication internationale: WO 2016/009140

(56) Documents cités:
- EP-A1- 1 947 854
- US-B1- 6 747 580

## Description

L'invention concerne un procédé d'accès à un contenu multimédia protégé, par un terminal comportant un désembrouilleur, un décodeur et une mémoire partagée. L'invention concerne également un terminal et un support d'enregistrement d'informations pour ce procédé d'accès à un contenu multimédia protégé.

Le procédé considéré peut être mis en œuvre après obtention du contenu multimédia protégé auprès de tout service de fourniture en ligne de contenus multimédias protégés, dans tout système de fourniture en ligne de contenus multimédias protégés dans lequel une tête de réseau assure la protection des contenus et leur transmission à une pluralité de terminaux.

Un terminal est alors utilisé par un utilisateur du système pour accéder à un contenu protégé en vue de le jouer. Accéder à un contenu multimédia protégé, signifie ici :
- le charger en mémoire, puis
- en lever la protection, à la volée alors qu'on le reçoit, ou sur un support d'enregistrement sur lequel il a préalablement été enregistré, puis
- le décoder, puis
- le transmettre à un appareil multimédia apte à le jouer, l'enregistrer, ou en faire toute autre utilisation offerte par le service de fourniture de contenus multimédias protégés.

Ici, par « lever la protection à la volée », on désigne le fait que des fragments du contenu multimédia sont traités au fur et à mesure de leur réception, sans attendre que le contenu multimédia complet, c'est-à-dire l'ensemble de ses fragments, ait été complètement entièrement reçu.

A cet effet, le terminal comporte un désembrouilleur, un décodeur, et une mémoire partagée par les précédents.

Les contenus fournis sont :
- des contenus audiovisuels, par exemple des programmes de télévision,
- des contenus audio seulement, par exemple un programme radiophonique, ou
- plus généralement, tout contenu numérique contenant de la vidéo et/ou de l'audio tel qu'une application informatique, un jeu, un diaporama, une image ou tout ensemble de données.

Parmi ces contenus, on considérera plus particulièrement dans la suite des contenus dits temporels. Un contenu multimédia temporel est un contenu multimédia dont le jeu est une succession dans le temps de sons, dans le cas d'un contenu temporel audio, ou d'images, dans le cas d'un contenu temporel vidéo, ou de sons et d'images temporellement synchronisés entre eux dans le cas d'un contenu multimédia temporel audiovisuel. Un contenu multimédia temporel peut également comporter des composantes temporelles interactives temporellement synchronisées avec les sons ou les images.

Pour être fourni, un tel contenu est d'abord codé, c'est-à-dire compressé, de façon à ce que sa transmission requière moins de bande passante.

A cet effet, la composante vidéo du contenu est codée selon un format vidéo, tel que MPEG-2. Le lecteur intéressé pourra trouver une présentation complète de ce format dans le document publié par l'Organisation internationale de normalisation sous la référence ISO/IEC 13818-2:2013 et le titre « Technologies de l'information - Codage générique des images animées et du son associé - Partie 2: Donnée vidéo ». De nombreux autres formats, tels que MPEG-4 ASP, MPEG-4 Part 2, MPEG-4 AVC (ou Part 10), HEVC (High Efficiency Video Coding), ou WMV (Windows Media Video) peuvent alternativement être utilisés, et reposent sur les mêmes principes. Ainsi, tout ce qui suit s'applique également à ces autres formats vidéo qui reposent sur le même principe que le codage MPEG-2.

Le codage MPEG-2 fait appel à des procédés généraux de compression de données. Pour les images fixes, elle exploite notamment la redondance spatiale interne à une image, la corrélation entre les points voisins et la moindre sensibilité de l'œil aux détails. Pour les images animées, elle exploite la forte redondance temporelle entre images successives. L'exploitation de cette dernière permet de coder certaines images du contenu, ici dites déduites, en référence à d'autres, ici dites sources, par exemple par prédiction ou interpolation, de sorte que leur décodage n'est possible qu'après celui desdites images sources. D'autres images, ici dites initiales, sont codées sans référence à de telles images sources, c'est-à-dire qu'elles contiennent chacune, lorsqu'elles sont codées, l'ensemble des informations nécessaires à leur décodage et donc qu'elles peuvent être complètement décodées indépendamment des autres images. Les images initiales sont ainsi le point d'entrée obligatoire lors de l'accès au contenu. Le contenu codé résultant ne comporte donc pas les données nécessaires au décodage de chacune des images indépendamment des autres, mais est constitué de « séquences » selon la terminologie MPEG-2. Une séquence réalise la compression d'au moins un « groupe d'images » (ou GOP, pour Group Of Pictures, dans MPEG-2).

Un groupe d'images est une suite d'images consécutives dans laquelle chaque image est :
- soit initiale et source pour au moins une image déduite contenue dans la même suite d'images consécutives,
- soit déduite et telle que chacune des images sources nécessaires à son décodage appartient à la même suite d'images consécutives.

Un groupe d'images ne contient pas de suite d'images consécutives plus petite et possédant les mêmes propriétés que ci-dessus. Le groupe d'images est ainsi la plus petite partie de contenu à laquelle on peut accéder sans avoir à décoder au-préalable une autre partie de ce contenu.

Une séquence est délimitée par une « en-tête » et une « fin », chacune identifiée par un premier code spécifique. L'en-tête comporte des paramètres qui caractérisent des propriétés attendues des images décodées, telles que les tailles horizontales et verticales, ratio, fréquence. Le standard recommande de répéter l'en-tête entre les groupes d'images de la séquence, de façon à ce que ses occurrences successives soient espacées d'environ quelques secondes dans le contenu codé.

Par exemple, un groupe d'images comporte le plus couramment plus de 5 à 10 images et, généralement, moins de 12 ou 20 ou 50 images. Par exemple, dans un système à 25 images par seconde, un groupe d'images, représente typiquement une durée de jeu supérieure à 0,1 ou 0,4 seconde et, généralement, inférieure à 0,5 ou 1 ou 10 secondes.

Un contenu multimédia temporel peut comporter plusieurs composantes vidéo. Dans ce cas, chacune de ces composantes est codée comme ci-dessus décrit.

La composante audio du contenu est par ailleurs codée selon un format audio tel que MPEG-2 Audio. Le lecteur intéressé pourra trouver une présentation complète de ce format dans le document publié par l'Organisation internationale de normalisation sous la référence ISO/IEC 13818-3:1998 et le titre « Technologies de l'information - Codage générique des images animées et des informations sonores associées - Partie 3: Son ». De nombreux autres formats, tels que MPEG-1 Layer III, mieux connu sous l'appellation MP3, AAC (Advanced Audio Coding), Vorbis ou WMA (Windows Media Audio), peuvent alternativement être utilisés, et reposent sur les mêmes principes. Ainsi, tout ce qui suit s'applique également à ces autres formats audio qui reposent sur les mêmes principes que le codage MPEG-2 Audio.

Le codage MPEG-2 Audio obéit aux mêmes principes ci-dessus décrits pour celle d'un contenu temporel vidéo. Le contenu codé résultant est donc, de façon analogue, constitué de « trames ». Une trame est l'analogue, en audio, d'un groupe d'images en vidéo. La trame est donc notamment la plus petite partie de contenu audio à laquelle on peut accéder sans avoir à décoder une autre partie de ce contenu audio. La trame contient en outre l'ensemble des informations utiles à son décodage.

Une trame comporte typiquement plus de 100 ou 200 échantillons codant chacun un son et, généralement, moins de 2000 ou 5000 échantillons. Typiquement, lorsqu'elle est jouée par un appareil multimédia, une trame dure plus de 10 ms ou 20 ms et, généralement, moins de 80 ms ou 100 ms. Par exemple, une trame comporte 384 ou 1152 échantillons codant chacun un son. Selon la fréquence d'échantillonnage du signal, cette trame représente une durée de jeu de 8 à 12, ou 24 à 36 millisecondes.

Un contenu multimédia temporel peut comporter plusieurs composantes audio. Dans ce cas, chacune de ces composantes est codée comme ci-dessus décrit.

Les composantes codées du contenu, également qualifiées de trains élémentaires de données, sont ensuite multiplexées, c'est-à-dire, notamment, synchronisées temporellement, puis combinées en un seul train, ou flux, de données.

Un tel contenu, notamment lorsqu'il est l'objet de droits tels que des droits d'auteur ou des droits voisins, est fourni protégé par un système de protection de contenus multimédias. Ce système permet d'assurer le respect de conditions d'accès au contenu qui découlent de ces droits.

Il est alors typiquement fourni chiffré au titre de sa protection par un système de gestion de droits numériques, ou DRM, pour Digital Rights Management, en anglais. Ce chiffrement est généralement réalisé au moyen d'une clé de chiffrement, par un algorithme symétrique. Il s'applique au flux résultant du multiplexage ou, avant multiplexage, aux composantes du contenu codé.

Un système de DRM est en effet un système de protection de contenus multimédias. La terminologie du domaine des systèmes de gestion de droits numériques est ainsi utilisée dans la suite de ce document. Le lecteur intéressé pourra par exemple en trouver une présentation plus complète dans le document : DRM Architecture, Draft version 2.0, OMA-DRM-ARCH-V2_0-20040518-D, Open Mobile Alliance, 18 mai 2004.

Dans un tel système de gestion de droits numériques, l'obtention d'une licence permet à un terminal d'accéder au contenu multimédia protégé.

De structure bien connue, une telle licence comporte au moins une clé, dite de contenu, nécessaire au déchiffrement du contenu multimédia protégé par un algorithme de chiffrement symétrique.

La clé de contenu est généralement insérée dans la licence sous forme d'un cryptogramme obtenu par chiffrement de la clé de contenu avec une clé de chiffrement, dite « de terminal », propre au terminal ou connue de lui.

Pour accéder au contenu, le terminal extrait de la licence la clé de contenu, en déchiffrant son cryptogramme au moyen de sa clé de terminal.

Ensuite, le désembrouilleur du terminal désembrouille, c'est-à-dire déchiffre, le contenu au moyen de la clé de contenu ainsi extraite de la licence, en levant ainsi la protection. Le désembrouilleur génère ainsi un contenu multimédia en clair comportant au moins une suite temporelle de séquences vidéo ou de groupes d'images, ou de trames audio. Ce contenu multimédia est apte à être joué par un appareil multimédia raccordé au terminal. Ici, par « en clair », on désigne le fait que le contenu multimédia n'a plus besoin d'être déchiffré pour être joué, par un appareil multimédia, de façon directement perceptible et intelligible par un être humain. Par « appareil multimédia », on désigne en outre tout dispositif apte à jouer le contenu multimédia en clair, tel par exemple qu'un téléviseur ou un lecteur multimédia.

Puis le désembrouilleur transfère ensuite le contenu en clair dans la mémoire partagée.

Ensuite, le décodeur du terminal lit le contenu en clair dans la mémoire partagée, et le décode.

Enfin, le terminal transmet le contenu ainsi décodé à un appareil multimédia.

Plus précisément, dans le cas d'un contenu multimédia temporel, la réception, le traitement, puis la transmission à un appareil multimédia, par le terminal, du contenu, tels que ci-dessus décrits se font par fragment. Un fragment est une partie restreinte du flux multimédia en clair dont le jeu a une durée inférieure à celle du jeu du flux multimédia en entier. Un fragment comporte donc une partie restreinte de chaque composante vidéo et audio du flux multimédia en clair, dont le jeu a une même durée inférieure à celle du jeu du flux multimédia en entier. Ces parties restreintes de composantes sont synchronisées dans le flux pour être jouées simultanément. Un fragment comporte donc la partie restreinte de la suite temporelle de séquences vidéo ou de groupes d'images, ou de trames audio réalisant le codage de cette partie restreinte de composante du flux multimédia en clair. Cette partie restreinte est constituée, typiquement, d'une pluralité de séquences vidéos ou de groupes d'images, ou de trames audio successives.

Dans le mode d'accès au contenu par le terminal tel que ci-dessus décrit, le contenu désembrouillé est transféré dans la mémoire partagée du terminal par son désembrouilleur, pour ensuite y être lu par son décodeur. Le contenu en clair est donc présent dans cette mémoire, au moins entre l'instant où il y est déposé par le désembrouilleur et celui où il y est lu par le décodeur. Il est alors facile, dans un tel environnement ouvert, d'y lire le contenu désembrouillé, et d'obtenir ainsi un accès illégitime au contenu. Une protection supplémentaire du contenu au cours de sa présence en mémoire partagée est donc nécessaire.

Des solutions cryptographiques à ce problème sont connues, qui reposent sur le partage de clés par le désembrouilleur et le décodeur. Dans ces solutions, le désembrouilleur chiffre le contenu désembrouillé, avant de le transférer dans la mémoire partagée. Ensuite, le décodeur lit le contenu ainsi chiffré dans la mémoire partagée, puis le déchiffre et, avant qu'il ne soit éventuellement enregistré dans une mémoire du terminal, le décode, et le transmet à un appareil multimédia apte à le jouer. Ces solutions cryptographiques sont sures mais ont pour inconvénient d'être complexes et d'exiger des ressources informatiques importantes pour mener à bien les calculs cryptographiques mis en jeu.

D'autres solutions sont connues qui partagent cet inconvénient, consistant par exemple en la traduction du contenu en d'autres formats de contenu.

Des solutions consistant en la mise en œuvre de mécanismes de sécurité tels que la vérification, par le module de DRM du terminal, de l'application de destination du contenu en clair, sont également connues. Ces solutions présentent l'inconvénient selon lequel cette mise en œuvre est peu sûre dans des milieux ouverts tels que des terminaux.

Le brevet EP2268020 protège une solution alternative consistant en une altération de bits du contenu désembrouillé. Cette solution est décrite comme requérant de réaliser un compromis entre les ressources de calcul requises par sa mise en œuvre, et sa sécurité. Pour présenter un gain substantiel en termes de ressources de calcul requises, elle doit donc s'accompagner par une perte notable en termes de sécurité.

La présente invention vise à offrir une solution alternative plus sûre que celle de la demande EP2268020 et au moins aussi économique en temps de calcul.

De l'état de la technique est également connu de US6747580B1. EP1947854 concerne le problème selon lequel la copie de contenu non autorisé est possible lorsque le contenu est déchiffré à un moment donné. La solution proposée est la suivante: "empoisonner" les données cryptées afin qu'elles ne puissent plus être lues par un décodeur standard, modifier certains bits prédéterminés du contenu, le rendant inutilisable à moins que le dispositif utilisateur ne puisse effectuer le calcul inverse au moment de la lecture; substituer des valeurs de bits par des bits prédéterminés, ou simplement les changer. La modification de bits dans des secteurs particuliers des données rend les données inutiles.

L'invention a ainsi pour objet un procédé d'accès à un contenu multimédia protégé conforme à la revendication 1.

Les modes de réalisation de ce procédé d'accès à un contenu multimédia protégé peuvent comporter des caractéristiques des revendications dépendantes.

Ces modes de réalisation de ce procédé d'accès à un contenu multimédia protégé présentent en outre les avantages suivants :
- L'utilisation d'une première table de correspondance permet de mettre en œuvre une sélection de la suite de N bits substitués dans la première table plutôt que son calcul en fonction de la valeur de la suite de M bits d'origine. Cela présente un avantage supplémentaire en termes de sécurité, en rendant plus difficile la cryptanalyse du procédé, et plus précisément en garantissant que l'observation extérieure, par exemple du temps de calcul ou de la consommation électrique, du système au cours de la mise en œuvre du procédé, en regard des valeurs des suites de bits d'origine et substitués, ne donne pas d'information sur la nature de la substitution de bits réalisée pour obtenir le fragment modifié. De plus, la mise en œuvre d'une opération d'entrée-sortie dans la première table de correspondance plutôt qu'une opération de calcul, présente également l'avantage de réduire de façon importante le temps de calcul.
- L'utilisation d'une seconde table de correspondance permet de mettre en œuvre une sélection précédée de la recherche de la suite de N bits substitués dans la seconde table plutôt qu'une recherche dans la première table de la suite de M bits d'origine à laquelle est associée la suite de N bits substitués du fragment modifié. Cela présente l'avantage de réduire la complexité de la recherche effectuée, et donc le temps de calcul.
- Le classement des lignes de la seconde table de correspondance par ordre de valeurs de M bits d'indices donnés, permet d'utiliser ces M bits comme index de la seconde table de correspondance, afin de sélectionner directement dans la seconde table de correspondance la suite de M bits d'origine associée à la suite de N bits substitués du fragment modifié. Cette mise en œuvre d'une opération d'entrée-sortie dans la seconde table de correspondance plutôt qu'une opération de recherche, présente comme plus haut l'avantage de réduire de façon importante le temps de calcul.
- L'utilisation de plusieurs premières tables de correspondance différentes permet d'augmenter la sécurité du procédé en rendant plus difficile sa cryptanalyse. Plus précisément cela permet de varier les remplacements de bits réalisés pour produire un fragment modifié et reconstruire le fragment en clair.
- L'utilisation de premières tables de correspondance différant entre elles par la valeur de M ou par la valeur de N, permet d'augmenter la sécurité du procédé en rendant plus difficile sa cryptanalyse. Plus précisément, cela permet de varier les longueurs des suites de bits d'origine ou des suites de bits substitués.
- Le tirage aléatoire ou pseudo-aléatoire d'un nombre permet d'augmenter la sécurité du procédé en rendant plus difficile sa cryptanalyse. Plus précisément, cela permet de varier aléatoirement la succession des remplacements de bits réalisés pour produire un fragment modifié et reconstruire le fragment en clair.
- La prise égal à une puissance strictement positive de deux du nombre des premières tables de correspondance différentes ou des octets du nombre aléatoirement ou pseudo-aléatoirement tiré, permet de réduire le temps de calcul. Plus précisément, cela simplifie la sélection à l'étape c) et la détermination à l'étape f), dans lesquelles interviennent des divisions modulo ces nombres. En effet, ces divisions reviennent à des décalages de bits si ces nombres sont des puissances de deux.

L'invention a également pour objet un support d'enregistrement d'informations comportant des instructions pour la mise en œuvre du procédé ci-dessus d'accès à un contenu multimédia protégé, lorsque ces instructions sont exécutées par un calculateur électronique.

L'invention a également pour objet un terminal comportant un désembrouilleur, un décodeur et une mémoire partagée pour mettre en œuvre le procédé ci-dessus d'accès à un contenu multimédia protégé.

L'invention sera mieux comprise à la lecture de la description qui va suivre, donnée uniquement à titre d'exemple non limitatif, et faite en référence aux dessins sur lesquels :
- La figure 1 est une représentation schématique d'un terminal comportant un désembrouilleur, un décodeur et une mémoire partagée,
- La figure 2 est une représentation schématique partielle d'une première et d'une seconde tables de correspondance correspondantes, et
- La figure 3 est une représentation schématique d'un procédé d'accès à un contenu multimédia protégé à l'aide du terminal de la figure 1.

Dans ces figures, les mêmes références sont données pour désigner les mêmes éléments.

Dans la suite de cette description, les caractéristiques bien connues de l'homme du métier ne sont pas décrites en détail.

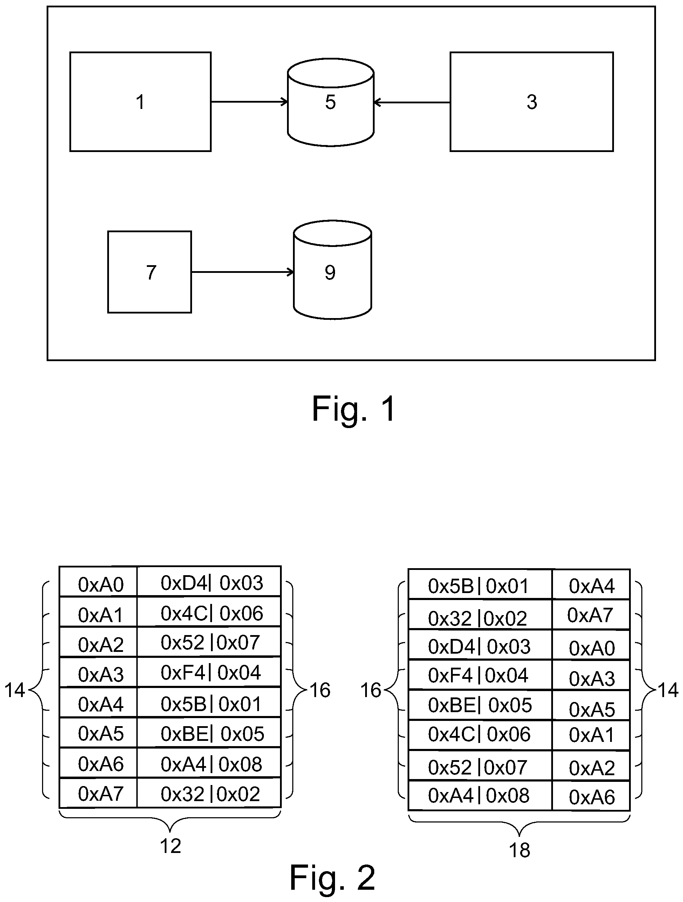

La figure 1 représente un terminal apte à accéder à un contenu multimédia protégé. A cet effet, ce terminal comporte un désembrouilleur 1, un décodeur 3, une mémoire 5 partagée par le désembrouilleur et le décodeur, un calculateur électronique 7 programmable, et une mémoire 9.

Le désembrouilleur 1 est apte à mémoriser des informations dans la mémoire 5 partagée et, comme le décodeur 3, à en extraire des informations.

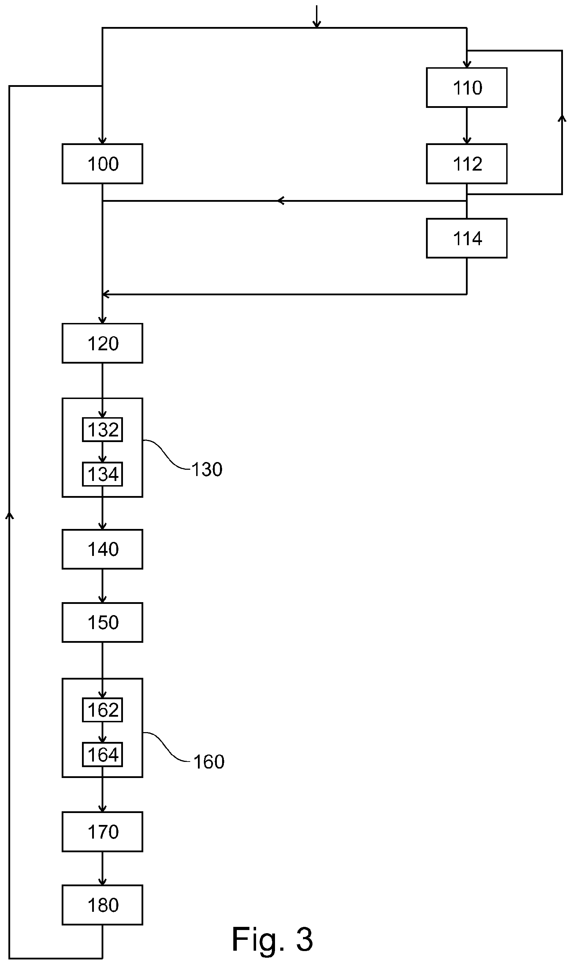

Le calculateur électronique 7 est apte à exécuter des instructions mémorisées dans la mémoire 9. La mémoire 9 comporte les instructions nécessaires à l'exécution du procédé de la figure 3.

Les mémoires 5 partagée et 9 peuvent être indépendantes, comme sur la figure 1, ou confondues, ou encore la mémoire 5 partagée peut être une partie de la mémoire 9.

La figure 2 représente une partie d'une première table 12 de correspondance et une partie d'une seconde table 18 de correspondance. Sur cette figure, un octet est donné sous forme hexadécimale, et le symbole « | » représente l'opération de concaténation.

La première table 12 comporte une ligne pour chaque valeur possible d'octet. Elle comporte donc une première colonne contenant toutes les suites 14 possibles de huit bits d'origine. Le nombre de bits de la suite 14, noté M par la suite, est ici pris égal à huit. Il existe donc 2^{M} suites 14 dont les valeurs sont comprises entre 0x01 et 0xFF. Chaque ligne de la table 12 associe, à sa suite 14, une concaténation d'un premier et d'un second octets, c'est-à-dire une suite 16 de seize bits substitués. Le nombre de bits de la suite 16, noté N par la suite, est ici pris égal à seize. Il existe donc 2^{N} suites 16 possibles mais la table 12 n'en contient que 2^{M}. Chaque suite 16 est différente des autres suites 16. Les suites 16 sont contenues dans une seconde colonne de la table 12.

Les lignes de la table 12 sont classées par ordre de valeurs des suites 14 pour constituer un index de cette table. Cet index permet d'accélérer la recherche et la sélection d'une ligne de la table 12 contenant une suite 14 donnée. De plus, la valeur de cet index varie d'un pas régulier d'une valeur à la suivante ce qui permet d'identifier directement la ligne de la table 12 contenant cet index sans avoir à lire le contenu d'autres lignes. Ici, la valeur de l'index est égale au numéro de la ligne de la table 12 contenant cette suite 14. Cela permet donc de rechercher plus rapidement une suite 14 donnée. Pour simplifier l'illustration, la figure 2 ne représente que les huit lignes relatives aux suites 14 de valeurs, respectivement, 0xA0 à 0xA7. Par exemple, la première ligne représentée de la table 12 associe la suite 16 de seize bits substitués 0xD4|0x03 à la suite 14 de huit bits d'origine 0xA0. La suite 0xA0 se trouve sur la ligne 0xA0, c'est-à-dire la 160-ième ligne, de la table 12 en partant de la première ligne de cette table.

En outre, dans cette table 12, l'ensemble des valeurs des seconds octets parmi les octets concaténés, c'est-à-dire les huit bits d'indices 9 à 16 de chaque suite 16, est égal à l'ensemble des suites 14. Sur la figure 2, les seconds octets visibles des suites 16 sont compris entre 0x01 et 0x08.

La seconde table 18 de la figure 2, comporte une ligne pour chaque suite 16 de seize bits substitués. Chaque ligne associe, à cette suite 16, la suite 14 à laquelle cette suite 16 est associée par la table 12. Ces tables 12 et 18 sont ainsi dites « correspondantes ». Les suites 16 et 14 sont contenues, respectivement, dans les première et seconde colonnes de la table 18. La première ligne représentée de la table 18 associe par exemple la suite 14 de huit bits d'origine 0xA4 à la suite 16 de seize bits substitués 0x5B|0x01.

De plus, les lignes de la table 18 sont classées par ordre de valeurs des seconds octets, c'est-à-dire les huit bits d'indices 9 à 16 de chaque suite 16. Les valeurs de ces seconds octets parcourent l'ensemble des valeurs possibles comprises entre 0x01 et 0xFF. Ils constituent ainsi un index de cette seconde table. Comme précédemment, cet index permet d'accélérer la recherche et la sélection d'une ligne de la table 18 contenant une suite 16 donnée. En effet, puisque la valeur de cet index varie d'un pas régulier d'une valeur à la suivante, cela permet d'identifier directement la ligne de la table 18 contenant cet index sans avoir à lire le contenu d'autres lignes. Ici, la valeur de l'index est égale au numéro de la ligne de la table 18 contenant cette suite 16. En particulier, cela permet un gain de temps par rapport au cas où les valeurs de l'index ne sont pas uniformément réparties entre leurs valeurs extrémales. Sur la figure 2, les seconds octets représentés prennent les valeurs comprises entre 0x01 et 0x08 et occupent, respectivement et dans l'ordre croissant, les lignes une à huit de la table 18.

Le fonctionnement du terminal de la figure 1 va maintenant être décrit en référence au procédé de la figure 3.

Le procédé débute par une phase d'initialisation. Cette phase d'initialisation comporte :
- des étapes 110 et 112 lors desquelles les tables 12, 18 sont construites et mémorisées, et
- une étape 114 de construction d'un nombre S d'initialisation.

Cette phase d'initialisation est déclenchée, par exemple, à chaque démarrage du terminal. Dans ce cas, de préférence, les tables construites et le nombre S sont mémorisés dans une mémoire volatile, comme une RAM (Random Access Memory), pour être automatiquement effacés lorsque le terminal est éteint.

Plus précisément, lors de l'étape 110, le terminal construit et mémorise la table 12 dans une mémoire accessible au désembrouilleur 1. Cette mémoire peut être une mémoire propre à ce dernier, une partie de la mémoire 9, ou la mémoire 5 partagée. Par exemple, la table 12 est construite en réalisant les opérations suivantes pour chaque suite 14 possible :
a) le terminal tire aléatoirement une suite 16 dans l'ensemble des 2^{N} suites 16 possibles, puis
b) si la suite 16 ainsi tirée aléatoirement n'a pas déjà été associée à une autre suite 14, alors elle est associée dans la table 12 à cette suite 14 et, dans le cas contraire, on réitère les opérations a) et b).

Ensuite, lors d'une étape 112, le terminal construit et mémorise la table 18 correspondante dans une mémoire accessible au décodeur 3. Cette mémoire peut être une mémoire propre à ce dernier, une partie de la mémoire 9, ou la mémoire 5 partagée. Par exemple, lors de cette étape 112, la table 18 est construite à partir de la table 12 précédemment enregistrée lors de l'étape 110. Pour cela, par exemple, les contenus des première et seconde colonnes de la table 12 sont permutés puis les lignes de cette nouvelle table sont classées par ordre croissant ou décroissant des valeurs des seconds octets de la première colonne. Dans ce mode de réalisation, les lignes sont classées par ordre croissant des valeurs des seconds octets.

L'étape 110 est mise en œuvre un nombre prédéterminé t₁ de fois de façon à mémoriser t₁ tables 12 différentes. De préférence, le nombre t₁ est égal à une puissance strictement positive de deux. De même, l'étape 112 est exécutée t₂ fois de façon à mémoriser t₂ tables 18 différentes, t₁ et t₂ sont des nombres entiers positifs ou nuls, et t₁ est supérieur ou égal à t₂. Dans ce mode de réalisation, t₁ et t₂ sont égaux. Ici, lors de chaque exécution de l'étape 110, les nombres M et N sont modifiés en respectant toujours le fait que le nombre N est strictement supérieur au nombre M. Par exemple, à chaque itération de l'étape 110, le nombre M est tiré aléatoirement ou pseudo-aléatoirement dans une plage prédéterminée de valeurs possibles. Ensuite, on procède de même avec le nombre N. Typiquement, le nombre M varie entre 4 et 16 bits et le nombre N varie entre 8 et 24 bits. On obtient ainsi des tables 12 différant les unes des autres, en plus, par les valeurs des nombres M et N.

Chacune des tables 12 mémorisées est identifiée au moyen d'un indice i compris entre 0 et t₁-1. De même, chacune des tables 18 mémorisées est identifiée par un indice. L'indice des tables 18 est choisi de manière à ce que les tables 12 et 18 correspondantes portent le même indice i. Par la suite, on note T[i] et L[i], respectivement, les tables 12 et 18 correspondantes d'indice i.

Lors de l'étape 114, le terminal tire, de façon aléatoire ou pseudo-aléatoire, un nombre entier strictement positif de k octets. Ce nombre entier constitue le nombre S. De préférence, ce nombre S est tiré aléatoirement ou pseudo-aléatoirement dans un ensemble contenant uniquement des puissances strictement positives de deux. Le nombre k est soit un nombre prédéterminé soit lui-même tiré aléatoirement ou pseudo-aléatoirement dans un ensemble prédéterminé de valeurs. De façon similaire, dans ce mode de réalisation, le terminal tire aussi de façon aléatoire ou pseudo-aléadoire un nombre entier u strictement positif. Ce nombre u représente un nombre d'utilisations consécutives d'une même table 12. Ensuite, les nombres S et u ainsi construits sont mis à disposition du désembrouilleur 1 et du décodeur 3. A cet effet, le terminal mémorise les nombres S et u ainsi que la longueur k en octets du nombre S dans la mémoire 5 partagée. De plus, dans ce mode de réalisation, le nombre t₁ est également mémorisé dans la mémoire 5.

Avant, en parallèle de, ou après la phase d'initialisation, lors d'une étape 100, le désembrouilleur 1 reçoit un fragment chiffré d'un contenu multimédia et une clé de déchiffrement de ce fragment chiffré. De façon connue de l'homme du métier, le fragment chiffré et la clé de déchiffrement peuvent être reçus conjointement, c'est-à-dire à un même moment et par l'intermédiaire d'un même réseau de communication ou d'un même support d'enregistrement interne ou externe au terminal. Le fragment chiffré et la clé de déchiffrement peuvent aussi être reçus séparément, c'est-à-dire à des moments distincts ou par l'intermédiaire de réseaux de communication ou de supports d'enregistrement, internes ou externes au terminal, distincts. Ici, comme cela a été décrit plus haut, la clé de déchiffrement du fragment chiffré est reçue par le terminal dans une licence de DRM.

Après l'étape 100 et la phase d'initialisation, lors d'une étape 120, le désembrouilleur 1 déchiffre le fragment avec la clé de déchiffrement, tous deux reçus à l'étape 100, obtenant ainsi un fragment en clair.

Après l'étape 120, et avant que le fragment déchiffré ne soit enregistré dans la mémoire 5, lors d'une étape 130, le désembrouilleur remplace des bits d'origine du fragment en clair par des bits substitués différents pour obtenir un fragment modifié.

Plus précisément, le désembrouilleur 1 remplace, par blocs constitués de proche en proche, l'ensemble des bits d'origine du fragment en clair par des bits substitués. Chacun de ces blocs de bits sera dans la suite noté Pₓ. L'indice « x » désigne le numéro d'ordre ou le rang du bloc Pₓ. Ici, le numéro d'ordre du premier bloc de bits du fragment en clair est « 1 » et celui du dernier bloc de bits est un entier « X » à priori inconnu, et déterminé au terme de l'étape 130. L'indice « x » est donc compris entre 1 et X. La concaténation de l'ensemble des blocs Pₓ dans l'ordre des indices x est égale au fragment en clair.

Pour cela, pour chacun de ces blocs Pₓ, le désembrouilleur 1 met en œuvre une opération 132, puis une opération 134.

Lors de l'opération 132, le désembrouilleur 1 sélectionne d'abord l'une des tables 12 mémorisées lors de l'étape 110 en vue de l'utiliser pour remplacer les bits d'origine de ce bloc Pₓ par des bits substitués.

A cet effet, ici, le désembrouilleur 1 extrait de la mémoire 5 le nombre S et sa longueur k en octets, le nombre u, ainsi que le nombre t₁ de tables 12 mémorisées à l'étape 110. Ensuite, l'indice i de la table T[i] sélectionnée est déterminé à l'aide de la formule suivante : i = S[((x-1) div u) modulo k] modulo t₁, où
- S[j] est la fonction qui retourne l'octet d'indice j dans le nombre S,
- div désigne l'opération de division euclidienne.

Une fois la table T[i] sélectionnée, le nombre M de bits des suites 14 contenues dans la première colonne de cette table T[i] est connu.

Ensuite, lors de l'opération 134, le désembrouilleur 1 réalise le remplacement des bits d'origine du bloc Pₓ par des bits substitués au moyen de la table T[i] sélectionnée lors de la précédente exécution de l'opération 132. Plus précisément, s'il reste au moins M bits d'origine du fragment en clair à remplacer, le désembrouilleur 1 constitue le bloc Pₓ à l'aide des M premiers bits du fragment en clair restant à remplacer. Ce bloc Pₓ constitue donc une suite de M bits d'origine consécutifs du fragment en clair. Le remplacement consiste ensuite :
- à rechercher et à lire, dans la table 12 sélectionnée, la suite 16 associée à la suite 14 ayant la même valeur que ce bloc Pₓ, et
- à concaténer, dans l'ordre de lecture, cette suite 16 lue aux précédentes suites 16 lues.

Dans ce mode de réalisation, la recherche est particulièrement simple et rapide car le numéro de la ligne de la table T[i] contenant la suite 16 à lire peut directement être construit à partir de la valeur du bloc Pₓ et sans consulter le contenu d'autres lignes de cette table. Par exemple, la suite 16 est lue sur la ligne de numéro Pₓ de la table T[i].

En réitérant les opérations 132 et 134, on construit ainsi de proche en proche un fragment modifié dans lequel chaque bloc Pₓ est remplacé par une suite 16 respective.

S'il reste moins de M bits d'origine du fragment en clair à remplacer, les bits d'origine du fragment en clair restant à remplacer sont complétés arbitrairement par des bits supplémentaires pour constituer un bloc de M bits consécutifs à traiter comme les précédents.

Par exemple, ici, si la table T[i] d'indice i est celle de la figure 2, et si le bloc Pₓ du fragment en clair est égal à la suite 14 de huit bits d'origine 0xA4, alors le bloc d'indice x du fragment modifié est la suite 16 de seize bits substitués 0x5B|0x01.

Ensuite, lorsque les opérations 132 et 134 ont été mises en œuvre pour l'ensemble des blocs Pₓ, lors d'une étape 140, le désembrouilleur 1 mémorise seulement le fragment modifié ainsi obtenu dans la mémoire 5 partagée.

Puis, lors d'une étape 150, le décodeur 3 extrait le fragment modifié de la mémoire 5 partagée.

Ensuite, lors d'une étape 160, le décodeur 3 remplace les bits substitués du fragment modifié par les bits d'origine pour reconstruire le fragment en clair à partir du fragment modifié.

Plus précisément, le décodeur 3 remplace, par blocs constitués de proche en proche, l'ensemble des bits substitués du fragment modifié par les bits d'origine. Chacun de ces blocs de bits sera dans la suite noté Pₓ*. L'indice « x » désigne le numéro d'ordre ou le rang du bloc Pₓ*. Ici, le numéro d'ordre du premier bloc de bits du fragment modifié est « 1 » et celui du dernier bloc de bits est un entier « X » à priori inconnu, et déterminé au terme de l'étape 160. L'indice « x » est donc compris entre 1 et X. La concaténation des blocs Pₓ* dans l'ordre des indices x est égale au fragment modifié.

Pour cela, pour chacun de ces blocs Pₓ*, le décodeur 3 met en œuvre une opération 162, puis une opération 164.

Lors de l'opération 162, le décodeur 3 détermine d'abord l'indice i de la table T[i] sélectionnée et utilisée lors de l'étape 130. Puis, il sélectionne la table L[i] qui forme avec la table T[i] une paire de tables correspondantes.

A cet effet, ici, le décodeur 3 extrait de la mémoire 5 le nombre S et sa longueur k en octets, le nombre u ainsi que le nombre t₁ de tables 12 mémorisées à l'étape 110. Ensuite, l'indice i de la table L[i] est déterminé à l'aide de la formule suivante : i = S[((x-1) div u) modulo k] modulo t₁, où x est le numéro d'ordre du bloc Pₓ* qui va être traité lors de l'opération 164 suivante. Puis le décodeur 3 sélectionne la table L[i] d'indice i. A partir de ce moment, le nombre N de bits des suites 16 de la table L[i] est connu.

Ensuite, lors de l'opération 164, le décodeur 3 réalise le remplacement des bits substitués du bloc Pₓ* par des bits d'origine au moyen de la table L[i] sélectionnée lors de la précédente exécution de l'opération 162. Pour cela, il constitue le bloc Pₓ* avec les N premiers bits du fragment modifié restant à remplacer. Le bloc Pₓ* est ainsi une suite de N bits substitués consécutifs. Le remplacement consiste ensuite :
- à lire, dans la table L[i] sélectionnée, la suite 14 associée à la suite 16 dont la valeur est égale à celle du bloc Pₓ*, et
- à concaténer, dans l'ordre de lecture, cette suite 14 lue aux précédentes suites 14 lues.

La lecture de la suite 14 dans la table L[i] est ici particulièrement rapide car le second octet de la suite 16 permet de construire directement le numéro de la ligne de la table L[i] contenant la suite 14 à lire sans consulter le contenu d'autres lignes de cette table. Par exemple, la suite 14 est lue sur la ligne de la table L[i] dont le numéro de ligne est égal à la valeur du second octet de la suite 16.

En réitérant les opérations 162, 164, le décodeur reconstruit de proche en proche le fragment en clair.

Lors de l'opération 164, si le décodeur 3 détecte qu'il s'agit du dernier bloc Pₓ* à traiter du fragment modifié, alors le décodeur 3 remplace le dernier bloc Pₓ* comme les précédents. Ensuite, il ne concatène, aux précédentes suites 14 lues, que les premiers bits utiles de la suite 14. Pour déterminer le nombre de bits utiles de cette suite 14, le décodeur 3 utilise, par exemple, une information de longueur contenue dans la partie du fragment en clair déjà obtenu. La position de cette information de longueur dans le fragment en clair est fixée par le format connu de codage utilisé pour les fragments en clair. Cette information de longueur peut aussi être une information prédéterminée, relative à la structure de chaque fragment et imposée par le format de codage utilisé.

Par exemple, si la table L[i] est celle de la figure 2, et si le bloc Pₓ* est la suite de seize bits substitués 0x5B|0x01, alors le bloc Pₓ reconstruit du fragment en clair est la suite 14 de huit bits d'origine 0xA4.

Ensuite, lorsque les opérations 162 et 164 ont été mises en œuvre pour l'ensemble des blocs Pₓ*, et avant que le fragment en clair ne soit éventuellement enregistré dans une mémoire du terminal, lors d'une étape 170, le décodeur 3 décode le fragment en clair obtenu. Ici, le fragment en clair obtenu par le décodeur n'est jamais enregistré dans une mémoire partagée et, en particulier, dans la mémoire 5.

Enfin, lors d'une étape 180, le décodeur 3 transmet le fragment décodé à un appareil multimédia apte à jouer ce fragment décodé du contenu multimédia de manière qu'il soit directement perceptible et compréhensible par un être humain.

De nombreux autres modes de réalisation de l'invention sont possibles. Par exemple, le contenu multimédia est fourni protégé par un système d'accès conditionnel, ou CAS, pour Conditional Access System. La terminologie du domaine des systèmes d'accès conditionnel est alors utilisée. Le lecteur intéressé pourra par exemple en trouver une présentation plus complète dans le document : « Functional Model of a Conditional Access System », EBU Review, Technical European Broadcasting Union, Bruxels, BE, N° 266, le 21 décembre 1995. Dans ce cas, la clé de contenu est généralement désignée comme mot de contrôle, et reçue dans un message de contrôle des titres d'accès, ou ECM, pour Entitlement Control Message.

Dans un autre mode de réalisation, le contenu multimédia est fourni protégé par tout autre type de système de protection de contenus, tel par exemple qu'un système de protection de données plus classique ne réalisant pas de gestion de droits d'accès. Dans ce cas, la clé de contenu peut être reçue dans tout autre type de message de transmission.

La phase d'initialisation peut être déclenchée par d'autres événements. Par exemple, l'exécution des étapes 110 et 112 est déclenchée en réponse à l'exécution d'un module d'accès à un contenu protégé du terminal. Elle peut aussi être déclenchée périodiquement ou après un nombre prédéterminé d'utilisations des tables 12 et 18 ou du nombre S précédemment construits.

En variante, lors des étapes 110 et 112, les tables 12 et 18 peuvent être pré-calculées, puis statiques et intégrées aux instructions mémorisées dans la mémoire 9 au titre du développement de ces instructions.

En variante, les nombres M et N sont constants à chaque exécution de l'étape 110. Par exemple, le nombre M est choisi égal à huit et le nombre N est choisi égal à un multiple entier de huit supérieur ou égal à seize. Dans une autre variante, seul le nombre N varie d'une exécution à l'autre de l'étape 110 tandis que le nombre M reste constant.

Les M bits de chaque suite 16 des tables L[i] utilisés pour former l'index de cette table ne sont pas nécessairement les M derniers bits de chaque suite 16. En fait ces M bits peuvent être situé à n'importe quel emplacement dans la suite 16 à partir du moment où l'emplacement de ces M bits est connu par le décodeur 3. Par exemple, ces M bits occupent seulement les positions d'indice pair dans la suite 16.

Dans une autre variante, la première colonne de la table L[i] est simplement classée par ordre croissant ou décroissant des valeurs des suites 16 et aucun index tel que celui précédemment décrit pour la table 18 n'est utilisé.

Dans un autre mode de réalisation, après la mise en œuvre de l'étape 110, l'étape 112 est omise. Seule les premières tables 12 sont mémorisées de manière à être à la disposition, non seulement du désembrouilleur 1, mais aussi du décodeur 3. Dans ce mode de réalisation, c'est donc la même table 12 qui est utilisée lors des opérations 134 et 164. Lors de l'opération 164, la valeur du bloc Pₓ* est recherchée dans la seconde colonne de la table 12, par exemple, en consultant successivement dans un ordre prédéterminé les suites 16 présentent dans la seconde colonne de cette table.

Dans un autre mode de réalisation, après la mise en œuvre de l'étape 110, l'étape 112 est mise en œuvre un nombre t₂ de fois, strictement positif et strictement inférieur à t₁, de sorte que, seules t₂ tables 18 sont mémorisées. Pa exemple, pour les valeurs de l'indice i comprises entre [0 ; t2-1], une table L[i] est construite pour chaque table T[i] construite. A l'inverse, pour les valeurs de l'indice i comprise entre [t2 ; t₁-1], seule la table T[i] est construite. Dans ce dernier cas, la table T[i] est mémorisée de façon à être à la disposition, non seulement du désembrouilleur 1, mais aussi du décodeur 3. Ultérieurement, si lors de l'étape 162 la valeur de l'indice i est comprise entre [0 ; t2-1], alors, lors de l'opération 164, la valeur du bloc Pₓ* est recherchée dans la table L[i] correspondante à la table T[i]. Par contre, si lors de l'étape 162, la valeur de l'indice i est comprise entre [t₂ ; t₁-1], lors de l'opération 164, la valeur du bloc Pₓ* est recherchée dans la seconde colonne la table T[i].

En variante, lors de l'étape 114, afin de mettre le ou les nombres S, k, u générés à la disposition du désembrouilleur 1 et du décodeur 3, le terminal les mémorise à la fois dans une mémoire propre au désembrouilleur 1 et dans une mémoire propre au décodeur 3.

Dans un mode de réalisation simplifié, t₁ est égal à un, c'est-à-dire qu'une seule table 12 est utilisée pour créer la totalité du ou des fragments modifiés.

Les opérations 132 et 162 peuvent être réalisées différemment. Par exemple, l'utilisation du nombre u peut être omise. Dans ce cas, l'indice i de la table 12 ou 18 sélectionnée est déterminé à l'aide de la formule suivante : i = S[(x-1) modulo k] modulo t₁. Il est aussi possible de déterminer l'indice i sans utiliser le nombre S. Par exemple, dans ce dernier cas, la formule suivante est utilisée : i = x modulo t₁. Dans ce cas, lors de l'étape 114, les nombres S, u et k ne sont pas construits.

Dans un autre mode de réalisation, les étapes 110, 112 et 114 sont omises. Ainsi, aucune table 12, 18 n'est mémorisée avant le début de l'étape 130. Dans ce cas, lors de l'opération 132, une table 12 est construite au fur et à mesure des exécutions de l'opération 132. Par exemple, on suppose ici que M et N sont des constantes connues et que la table 12 est vide initialement. Ensuite, si la valeur du prochain bloc Pₓ du fragment en clair ne correspond à aucune suite 14 déjà contenue dans la table 12, une suite 16 est générée puis mémorisée dans la table 12 en association avec les bits d'origine du bloc Pₓ. Par exemple, la suite 16 est générée :
a) en tirant aléatoirement ou pseudo-aléatoirement une suite 16 dans l'ensemble des 2^{N} suites 16 possibles, puis
b) si la suite 16 ainsi tirée aléatoirement n'a pas déjà été associée à une autre suite 14, alors elle est associée dans la table 12 à cette suite 14 et, dans le cas contraire, on réitère les opérations a) et b).

De cette façon, on construit de proche en proche une table, dite dynamique. Cette table dynamique ne diffère d'une table 12 qu'en ce qu'elle peut ne pas contenir toutes les suites 14 possibles. Ici, cette table dynamique contient seulement les suites 14 nécessaires pour traiter le fragment en clair. Ensuite, lors de l'étape 162, une table dynamique correspondante est construite, par exemple, comme décrit pour l'étape 112.

Dans un autre mode de réalisation, l'utilisation des tables 12, 18 est remplacée par l'utilisation d'une fonction F de chiffrement et d'une fonction F⁻¹ de déchiffrement. Plus précisément, la fonction F exécute différentes opérations arithmétiques et logiques sur les bits d'une suite 14 pour générer la suite 16 qui lui est associée. La fonction F⁻¹ est l'inverse de la fonction F. Elle retourne donc la valeur de la suite 14 associée à une suite 16. Les fonctions F et F⁻¹ sont donc utilisées à la place des tables 12, 18 lors de l'exécution, respectivement, des opérations 134 et 164.

Dans un autre mode de réalisation, l'ensemble des bits d'origine ne sont pas remplacés par des bits substitués lors de l'étape 130. A cet effet, par exemple, lors de l'étape 134, seule une fraction prédéterminée des blocs Pₓ font l'objet du remplacement décrit plus haut. Pour les autres blocs Pₓ, les bits d'origine sont directement concaténés au résultat du traitement des blocs précédents. La fraction prédéterminée des blocs remplacés peut être modifiée pour chaque fragment en clair traité. Par exemple, pour les fragments en clair pairs, le procédé n'applique les opérations 132 et 134 qu'à un bloc Pₓ sur deux et, pour les fragments impairs, qu'à un bloc Pₓ sur trois. Lors de l'étape 160, le décodeur 3 réalise les remplacements réciproques de ceux réalisés lors de l'étape 130. Ainsi, si l'ensemble des bits d'origine ne sont pas remplacés par des bits substitués lors de l'étape 130, lors de l'étape 160, seule une fraction des blocs est identifiée comme des blocs de bits substitués Pₓ*. Seuls ces blocs Pₓ* identifiés font l'objet du remplacement décrit plus haut, les autres bits étant directement concaténés au résultat du traitement des blocs précédents.

En variante, lors de l'étape 134, le désembrouilleur 1 constitue des blocs Pₓ de longueur supérieure à M, et ne remplace qu'une suite de M bits d'origine de ce bloc Pₓ par une suite 16. Cette suite de M bits d'origine est située à la même position prédéterminée dans chaque bloc Pₓ. Par exemple, cette suite de M bits d'origine est située au début du bloc Pₓ. Cela revient à intercaler, dans le fragment modifié, une suite de bits d'origine entre chaque suite 16. Lors de l'étape 164, le décodeur 3 constitue des blocs Pₓ* de longueur prédéterminée supérieure à N, et il ne remplace que la partie prédéterminée de ces bits correspondant à la suite 16. Les bits restants du bloc Pₓ* restent inchangés. La longueur du bloc Pₓ, et la position dans le bloc Pₓ de la suite de M bits d'origine remplacée, peuvent chacune être constante ou variable.

En variante, également, lors de l'opération 134, lorsqu'il reste moins de M bits d'origine du fragment en clair à remplacer, ces derniers bits d'origine ne sont pas remplacés, mais directement concaténés aux précédentes suites 16 lues. Dans ce cas, lors de l'opération 164, le dernier bloc Pₓ* compte moins de M bits, et ces bits ne sont pas remplacés, mais directement concaténés aux précédentes suites 14 lues.

Dans une autre variante, lors de l'étape 140, le fragment modifié est mémorisé dans la mémoire 5, conjointement avec la longueur utile, en bits, du fragment en clair ou de son dernier bloc Pₓ. Ensuite, le décodeur 3 extrait alors de la mémoire 5, lors de l'étape 150, le fragment modifié ainsi que cette longueur utile. Puis, lors de l'opération 164, le décodeur 3 remplace le dernier bloc Pₓ* comme les précédents, mais ne concatène, aux précédentes suites 14 lues, que les premiers bits utiles de la suite 14 ainsi lue. Le nombre de premier bits utiles est déterminé à partir de la longueur utile extraite lors de l'étape 150.

## Revendications

1. Procédé d'accès à un contenu multimédia protégé, par un terminal comportant un désembrouilleur, un décodeur et une mémoire partagée, dans lequel :
- lors d'une phase de désembrouillage, le désembrouilleur :
a) reçoit (100) un fragment chiffré du contenu multimédia et une clé de déchiffrement de ce fragment chiffré,
b) déchiffre (120) le fragment reçu avec la clé de déchiffrement reçue pour obtenir un fragment en clair,
c) remplace (134) des bits d'origine du fragment en clair par des bits substitués différents pour obtenir un fragment modifié, puis
d) mémorise (140) le fragment modifié dans la mémoire partagée,
- lors d'une phase de décodage, le décodeur :
e) extrait (150) le fragment modifié de la mémoire partagée,
f) remplace (164) les bits substitués du fragment modifié extrait par les bits d'origine pour reconstruire le fragment en clair,
g) décode (170) le fragment en clair reconstruit pour obtenir un fragment décodé, puis
h) transmet (180) le fragment décodé à un appareil multimédia apte à jouer ce fragment décodé du contenu multimédia,
**caractérisé en ce que** :
- lors de l'étape c) (130), une suite (14) de M bits d'origine consécutifs du fragment en clair est remplacée par une suite (16) de N bits substitués consécutifs, où N est strictement supérieur à M et la suite de N bits substitués est différente pour chaque suite différente de M bits d'origine, et
- lors de l'étape f) (160), la suite de N bits substituée est remplacée par la suite de M bits d'origine, et
- avant l'exécution des étapes b), c), d), e) et f), le procédé comporte :
• la mémorisation (110), par le terminal, d'une première table (12) de correspondance comportant une ligne pour chaque suite possible de M bits d'origine, chaque ligne associant à une suite possible de M bits d'origine une suite de N bits substitués différente de celles associées aux autres suites possibles de M bits d'origine, les lignes de la première table étant classées par ordre de valeurs des suites possibles de M bits d'origine pour constituer un index de cette première table, et
- l'étape c) comporte :
• la lecture dans la première table de correspondance de la suite de N bits substitués associée à la suite de M bits d'origine du fragment en clair, puis
• le remplacement de la suite de M bits d'origine du fragment en clair par la suite de N bits substitués ainsi sélectionnée pour obtenir le fragment modifié, et
- avant l'exécution des étapes b), c), d), e) et f), le procédé comporte :
• la mémorisation (112), par le terminal, d'une seconde table (18) de correspondance comportant une ligne pour chaque suite de N bits substitués, cette ligne associant à cette suite de N bits substitués la suite de M bits d'origine à laquelle cette suite de N bits substitués était associée par la première table, ces première et seconde tables étant dites « correspondantes » car la seconde table permet de reconstruire le fragment en clair à partir du fragment modifié obtenu à l'aide de la première table,
- l'étape f) comporte :
• la lecture dans la seconde table de correspondance, correspondant à la première table, de la suite de M bits d'origine associée à la suite de N bits substitués du fragment modifié, puis
• le remplacement de la suite de N bits substitués du fragment modifié par la suite de M bits d'origine ainsi lue pour reconstruire le fragment en clair, et
- l'ensemble des valeurs de M bits d'indices donnés deux à deux distincts de chaque suite de N bits substitués est égal à l'ensemble des valeurs possibles des suites de M bits, et les lignes de la seconde table sont classées uniquement par ordre de valeurs de ces M bits d'indices donnés de chaque suite de N bits substitués, de sorte que ces M bits d'indices donnés constituent un index de cette seconde table.

2. Procédé selon la revendication 1, dans lequel le procédé comporte :
- avant l'exécution des étapes b), c), d), e) et f), la mémorisation, par le terminal, de plusieurs premières tables de correspondance différentes, puis
- lors de l'exécution de l'étape c) suivante, la sélection (132) de l'une de ces premières tables, puis l'utilisation de la première table sélectionnée, puis
- lors de l'exécution de l'étape f) suivante, la détermination (162) de la première table sélectionnée à l'étape c).

3. Procédé selon la revendication 2, dans lequel, aux moins deux des premières tables de correspondance différentes mémorisées diffèrent entre elles au moins par la longueur M des suites de bits d'origine ou par la longueur N des suites de bits substitués.

4. Procédé selon l'une quelconque des revendications 2 ou 3, dans lequel :
- le procédé comporte, avant l'exécution des étapes b), c), d), e), et f), le tirage (114) aléatoire ou pseudo-aléatoire d'un nombre, par le terminal, et sa mise à disposition du désembrouilleur et du décodeur, et
- la sélection, à l'étape c), d'une première table de correspondance, puis la détermination, à l'étape f), de la première table sélectionnée à l'étape c), sont faites en fonction de ce nombre tiré.

5. Procédé selon l'une quelconque des revendications 2 à 4, dans lequel le nombre des premières tables de correspondance différentes mémorisées ou le nombre d'octets du nombre aléatoirement ou pseudo-aléatoirement tiré, au moins, est pris égal à une puissance strictement positive de deux.

6. Support (9) d'enregistrement d'informations, **caractérisé en ce qu'**il comporte des instructions pour la mise en œuvre d'un procédé conforme à l'une quelconque des revendications précédentes, lorsque ces instructions sont exécutées par un calculateur (7) électronique.

7. Terminal comportant un désembrouilleur (1), un décodeur (3) et une mémoire (5) partagée, **caractérisé en ce que** ce terminal comporte un calculateur électronique programmé pour exécuter les étapes c) et f) d'un procédé d'accès à un contenu multimédia protégé conforme à l'une quelconque des revendications 1 à 5.

## Patentansprüche

1. Verfahren zum Zugreifen auf einen geschützten Multimedia-Inhalt durch ein Endgerät, umfassend einen Entwürfeler, einen Decodierer und einen gemeinsam genutzten Speicher, bei dem:
- der Entwürfeler während einer Entwürfelungsphase:
a) ein verschlüsseltes Fragment des Multimedia-Inhalts und einen Entschlüsselungsschlüssel für dieses verschlüsselte Fragment empfängt (100),
b) das empfangene Fragment mit dem empfangenen Entschlüsselungsschlüssel entschlüsselt (120), um ein Klartextfragment zu erhalten,
c) ursprüngliche Bits des Klartextfragments durch verschiedene substituierte Bit ersetzt (134), um ein modifiziertes Fragment zu erhalten, dann
d) das modifizierte Fragment in dem gemeinsam genutzten Speicher speichert (140),
- der Decoder während einer Decodierungsphase:
e) das modifizierte Fragment aus dem gemeinsam genutzten Speicher extrahiert (150),
f) die substituierten Bits des extrahierten modifizierten Fragments durch die ursprünglichen Bits ersetzt (164), um das Klartextfragment wiederherzustellen,
g) das wiederhergestellte Klartextfragment decodiert (170), um ein decodiertes Fragment zu erhalten, dann
h) das decodierte Fragment an ein Multimediagerät übermittelt (180), das geeignet ist, dieses decodierte Fragment des Multimedia-Inhalts wiederzugeben, **dadurch**
**gekennzeichnet, dass**:
- beim Schritt c) (130) eine Folge (14) von M aufeinanderfolgenden ursprünglichen Bits des Klartextfragments durch eine Folge (16) von N aufeinanderfolgenden substituierten Bits ersetzt wird, wobei N streng größer als M ist und die Folge von N substituierten Bits für jede unterschiedliche Folge von M ursprünglichen Bits verschieden ist, und
- beim Schritt f) (160) die Folge von N substituierten Bits durch die Folge von M ursprünglichen Bits ersetzt wird und
- das Verfahren vor dem Ausführen der Schritte b), c), d), e) und f) umfasst:
» das Speichern (110) einer ersten Entsprechungstabelle (12) durch das Endgerät, die eine Zeile für jede mögliche Folge von M ursprünglichen Bits enthält, wobei jede Zeile einer möglichen Folge von M ursprünglichen Bits eine Folge von N substituierten Bits zuordnet, die von denen, die den anderen möglichen Folgen von M ursprünglichen Bits zugeordnet werden, verschieden ist, wobei die Zeilen der ersten Tabelle in der Reihenfolge von Werten der möglichen Folgen von M ursprünglichen Bits geordnet werden, um einen Index dieser ersten Tabelle zu bilden, und
- der Schritt c) umfasst:
• das Lesen der Folge von N substituierten Bits, die der Folge von M ursprünglichen Bits des Klartextfragments zugeordnet ist, in der ersten Entsprechungstabelle, dann
• das Ersetzen der Folge von M ursprünglichen Bits des Klartextfragments durch die so ausgewählte Folge von N substituierten Bits, um das modifizierte Fragment zu erhalten, und
- das Verfahren vor dem Ausführen der Schritte b), c), d), e) und f) umfasst:
» das Speichern (112) einer zweiten Entsprechungstabelle (18) durch das Endgerät, die eine Zeile für jede Folge von N substituierten Bits enthält, wobei diese Zeile dieser Folge von N substituierten Bits die Folge von M ursprünglichen Bits zuordnet, der diese Folge von N substituierten Bits durch die erste Tabelle zugeordnet wurde, wobei diese erste und diese zweite Tabelle "Entsprechungstabellen" genannt werden, weil die zweite Tabelle es ermöglicht, das Klartextfragment anhand des mithilfe der ersten Tabelle erhaltenen modifizierten Fragments wiederherzustellen,
- der Schritt f) umfasst:
• das Lesen der Folge von M ursprünglichen Bits, die der Folge von N substituierten Bits des modifizierten Fragments zugeordnet ist, in der zweiten Entsprechungstabelle, die der ersten Tabelle entspricht, dann
• das Ersetzen der Folge von N substituierten Bits des modifizierten Fragments durch die so gelesene Folge von M ursprünglichen Bits, um das Klartextfragment wiederherzustellen, und
- die Gesamtheit der Werte von M Bits von gegebenen Indexen, die paarweise verschieden von der Folge von N substituierten Bits sind, gleich der Gesamtheit der möglichen Werte der Folgen von M Bits ist und die Zeilen der zweiten Tabelle nur durch die Reihenfolge von Werten dieser M Bits von gegebenen Indexen jeder Folge von N substituierten Bits geordnet ist, so dass diese M Bits von gegebenen Indexen einen Index dieser zweiten Tabelle bilden.

2. Verfahren nach Anspruch 1, bei dem das Verfahren umfasst:
- vor dem Ausführen der Schritte b), c), d), e) und f) das Speichern von mehreren unterschiedlichen ersten Entsprechungstabellen durch das Endgerät, dann
- bei der Ausführung des folgenden Schritts c) das Auswählen (132) von einer dieser ersten Tabellen, dann das Verwenden der ausgewählten ersten Tabelle, dann
- bei der Ausführung des folgenden Schritts f) das Bestimmen (162) der im Schritt c) ausgewählten ersten Tabelle.

3. Verfahren nach Anspruch 2, bei dem zwei der gespeicherten unterschiedlichen ersten Entsprechungstabellen sich voneinander mindestens durch die Länge M der Folgen von ursprünglichen Bits oder durch die Länge N der Folgen von substituierten Bits unterscheiden.

4. Verfahren nach einem der Ansprüche 2 oder 3, bei dem:
- das Verfahren vor dem Ausführen der Schritte b), c), d), e) und f) das zufällige oder pseudozufällige Ziehen (114) einer Zahl durch das Endgerät und ihre Bereitstellung für den Entwürfeler und den Decoder umfasst und
- das Auswählen einer ersten Entsprechungstabelle im Schritt c), dann das Bestimmen der im Schritt c) ausgewählten ersten Tabelle im Schritt f) in Abhängigkeit von dieser gezogenen Zahl erfolgen.

5. Verfahren nach einem der Ansprüche 2 bis 4, bei dem die Anzahl der gespeicherten unterschiedlichen ersten Entsprechungstabellen oder die Anzahl von Bytes der zufällig oder pseudozufällig gezogenen Zahl mindestens gleich einer streng positiven Potenz von zwei gesetzt ist.

6. Datenspeichermedium (9), **dadurch gekennzeichnet, dass** es Befehle umfasst, die bei der Ausführung dieser Befehle durch einen elektronischen Rechner (7) ein Verfahren nach einem der vorhergehenden Ansprüche ausführen.

7. Endgerät, umfassend einen Entwürfeler (1), einen Decoder (3) und einen gemeinsam genutzten Speicher (5), **dadurch gekennzeichnet, dass** dieses Endgerät einen elektronischen Rechner beinhaltet, der dazu programmiert ist, die Schritte c) und f) eines Verfahrens zum Zugreifen auf einen geschützten Multimediainhalt nach einem der Ansprüche 1 bis 5 auszuführen.

## Claims

1. Method for accessing a protected multimedia content, by a terminal comprising a descrambler, a decoder and a shared memory, in which:
- in a descrambling phase, the descrambler:
a) receives (100) an encrypted fragment of the multimedia content and a key for decrypting this encrypted fragment,
b) decrypts (120) the received fragment with the decryption key received to obtain an unscrambled fragment,
c) replaces (134) original bits of the unscrambled fragment with different substituted bits to obtain a modified fragment, then
d) stores (140) the modified fragment in the shared memory,
- in a decoding phase, the decoder:
e) extracts (150) the modified fragment from the shared memory,
f) replaces (164) the substituted bits of the extracted modified fragment with the original bits to reconstruct the unscrambled fragment,
g) decodes (170) the reconstructed unscrambled fragment to obtain a decoded fragment, then
h) transmits (180) the decoded fragment to a multimedia appliance capable of playing this decoded fragment of the multimedia content,
**characterized in that**:
- in the step c) (130), a string (14) of M consecutive original bits of the unscrambled fragment is replaced with a string (16) of N consecutive substituted bits, where N is strictly greater than M and the string of N substituted bits is different for each different string of M original bits, and
- in the step f) (160), the string of N substituted bits is replaced with the string of M original bits, and
- before the execution of the steps b), c), d), e) and f), the method comprises:
• the storage (110), by the terminal, of a first look-up table (12) comprising a line for each possible string of M original bits, each line associating, with a possible string of M original bits, a string of N substituted bits different from those associated with the other possible strings of M original bits, the lines of the first table being ranked in order of values of the possible strings of M original bits to constitute an index of this first table, and
- the step c) comprises:
• the reading, in the first look-up table, of the string of N substituted bits associated with the string of M original bits of the unscrambled fragment, then
• the replacement of the string of M original bits of the unscrambled fragment with the duly selected string of N substituted bits to obtain the modified fragment, and
- before the execution of the steps b), c), d), e) and f), the method comprises:
• the storage (112), by the terminal, of a second look-up table (18) comprising a line for each string of N substituted bits, this line associating, with this string of N substituted bits, the string of M original bits with which this string of N substituted bits was associated by the first table, these first and second tables being said to "correspond" because the second table makes it possible to reconstruct the unscrambled fragment from the modified fragment obtained using the first table,
- the step f) comprises:
• the reading, in the second look-up table, corresponding to the first table, of the string of M original bits associated with the string of N substituted bits of the modified fragment, then
• the replacement of the string of N substituted bits of the modified fragment with the duly read string of M original bits to reconstruct the unscrambled fragment, and
- the set of the values of M bits of given indices, two-by-two distinct, from each string of N substituted bits is equal to the set of the possible values of the strings of M bits, and the lines of the second table are ranked only by order of the values of these M bits of given indices of each string of N substituted bits, such that these M bits of given indices constitute an index of this second table.

2. Method according to Claim 1, in which the method comprises:
- before the execution of the steps b), c), d), e) and f), the storage, by the terminal, of several different first look-up tables, then
- in the execution of the next step c), the selection (132) of one of these first tables, then the use of the selected first table, then
- in the execution of the subsequent step f), the determination (162) of the first table selected in the step c).

3. Method according to Claim 2, in which, at least two of the different first look-up tables stored differ from one another at least by the length M of the strings of original bits or by the length N of the strings of substituted bits.

4. Method according to either one of Claims 2 and 3, in which:
- the method comprises, before the execution of the steps b), c), d), e) and f), the random or pseudo-random drawing (114) of a number, by the terminal, and the provision thereof to the descrambler and the decoder, and
- the selection, in the step c), of a first look-up table, then the determination, in the step f), of the first table selected in the step c), are done as a function of this drawn number.

5. Method according to any one of Claims 2 to 4, in which the number of different first look-up tables stored or the number of bytes of the number randomly or pseudo-randomly drawn, at least, is taken to be equal to a strictly positive power of two.

6. Information storage medium (9), **characterized in that** it comprises instructions for implementing a method according to any one of the preceding claims, when these instructions are executed by an electronic computer (7).

7. Terminal comprising a descrambler (1), a decoder (3) and a shared memory (5), **characterized in that** this terminal comprises an electronic computer programmed to execute the steps c) and f) of a method for accessing a protected multimedia content according to any one of Claims 1 to 5.
